# FASCICULE DE BREVET EUROPEEN

(11) **EP 0 792 532 B1**
(45) Date de publication et mention de la délivrance du brevet: **22.12.1999**
(21) Numéro de dépôt: 96931849.2
(22) Date de dépôt: 16.09.1996
(51) Int. Cl.: H02G 3/04

(54) **EMBOUT POUR GOULOTTE DE CHEMINEMENT DE CONDUCTEURS ELECTRIQUES**
ENDSTUCK FUR EIN FUHRUNGSKANAL FUR ELEKTRISCHE LEITER
END PIECE FOR AN ELECTRICAL CONDUCTOR FEED TROUGH

(30) Priorité: 18.09.1995 FR 9510916
(43) Date de publication de la demande: 03.09.1997
(73) Titulaire: PLANET-WATTOHM, 60300 Senlis (FR)
(72) Inventeur: COUTANT, Régis, F-60117 Vauciennes (FR); LAIGLE, Jean, F-93700 Drancy (FR); DESTRUEL, Marc, F-60870 Villers-Saint-Paul (FR)
(74) Mandataire: CABINET BONNET-THIRION
(86) Numéro de dépôt international: FR9601431
(87) Numéro de publication internationale: WO9711519

(56) Documents cités:
- WO-A-88/06361
- US-A- 3 840 140

## Description

L'invention est relative à un embout, pour goulotte de cheminement de conducteurs électriques, destiné à fermer une extrémité de la goulotte fixée sur un support, en particulier un mur ou une paroi verticale, cet embout présentant une surface extérieure propre à se raccorder à celle de la goulotte pour assurer une transition vers le support de fixation de la goulotte.

Un tel embout est par exemple décrit dans les documents WO-A-8 806 361 et US-A-3 840 140.

Un tel embout est destiné à protéger l'extrémité de la goulotte contre les chocs et, surtout, à protéger les personnes par rapport au courant électrique circulant dans les conducteurs de la goulotte. Les deux fonctions se combinent d'ailleurs lorsque l'on veut empêcher l'introduction de corps étrangers (fils, épingles, tournevis) et plus particulièrement de corps étrangers conducteurs après que le conduit ait été soumis au choc. En outre, cet embout assure une fonction esthétique, notamment par la transition harmonieuse entre la surface extérieure de la goulotte et celle du support de fixation.

Classiquement, les embouts sont constitués de pièces fixées sur les profilés des goulottes par différents moyens tels que collage, emboîtement avec serrage, griffe métallique venant pénétrer la matière plastique de la goulotte et de l'embout, vissage sur la goulotte.

L'embout devant assurer une fonction d'obstruction de la goulotte et une fonction esthétique, ceci conduit à des exigences parfois contradictoires. En particulier, jusqu'à présent, il est nécessaire d'avoir deux types d'embout l'un pour montage à gauche et l'autre pour montage à droite de la goulotte.

L'invention a pour but, surtout, de fournir un embout qui permet de mieux satisfaire aux exigences imposées par la fonction d'obstruction et par la fonction esthétique et qui peut être monté aussi bien à gauche qu'à droite.

L'invention a également pour but de fournir un embout qui demeure d'une fabrication économique et dont le montage soit simple et rapide.

Selon l'invention, un embout pour goulotte de cheminement de conducteurs électriques, tel que défini précédemment, est caractérisé par le fait qu'il comprend deux parties, à savoir :
- une première partie d'obturation pour fermer l'espace intérieur de la goulotte, cette première partie présentant un sommet et une base et pouvant être montée indifféremment à une extrémité droite ou gauche de la goulotte, le passage d'une position de montage à l'autre étant obtenu par une rotation de cette première partie échangeant les positions du sommet et de la base ;
- une deuxième partie de recouvrement propre à se fixer sur la première partie et à assurer le raccordement à la surface extérieure de la goulotte, cette deuxième partie présentant une tête et un pied et pouvant passer d'une position montage à droite à une position montage à gauche par rotation autour d'un axe sensiblement parallèle à la direction tête/pied, sans échanger les positions respectives de la tête et du pied,
la combinaison de ces deux parties permettant à l'embout d'être réversible.

Généralement, la rotation de la première partie échangeant les positions de la base et du sommet est une rotation d'un demi-tour, tandis que la rotation de la deuxième partie pour le passage de la position montage à droite à la position montage à gauche est une rotation d'un quart de tour.

De manière usuelle, la goulotte, lorsqu'elle est installée, présente un bord supérieur ayant une forme différente de celle du bord inférieur; selon l'invention, le sommet et la base de la première partie d'obturation de l'embout ont une forme identique, tandis que la tête et le pied de la deuxième partie de recouvrement ont des formes différentes, adaptées à celles des bords supérieur et inférieur.

De préférence, la partie de recouvrement est comprise entre deux plans faisant entre eux un angle d'au moins 90 degrés et présente une surface extérieure en secteur de surface cylindrique, fermée en partie haute par un secteur de surface convexe formant la tête, et ouverte en partie basse au niveau du pied.

Le bord supérieur de la goulotte a généralement une forme cylindrique, à génératrices horizontales lorsque la goulotte est en place, avec section transversale en arc de cercle ; la tête de la partie de recouvrement de l'embout est constituée par une coiffe convexe comprise entre les faces d'un dièdre au moins droit, cette coiffe présentant un sommet destiné à être placé contre le support de fixation de la goulotte.

La partie d'obturation comprend un flanc formant obturateur de la goulotte et une paroi orthogonale au flanc formant avec ce dernier un dièdre droit dont la concavité est destinée à être tournée vers l'extérieur de la goulotte, la face extérieure de la paroi étant plane pour être placée contre le support de fixation de la goulotte tandis que la face extérieure du flanc est munie de pattes saillantes, en particulier avec des trous oblongs, pour la fixation de l'embout ; ces pattes saillantes sont généralement engagées dans l'espace intérieur de la goulotte.

Le flanc et la paroi formant le dièdre sont reliés, de préférence, par des nervures ayant un plan moyen orthogonal à l'arête du dièdre et situées dans la concavité du dièdre.

Le flanc de la partie d'obturation est avantageusement muni de pattes de centrage et de guidage pour le montage, ces pattes étant prévues en particulier au voisinage du sommet et de la base, et au milieu du flanc.

La partie de recouvrement et la partie d'obturation de l'embout comportent des moyens de liaison conjugués pour assurer la fixation de la partie de recouvrement sur la partie d'obturation.

Ces moyens de liaison conjugués peuvent comprendre, du côté de la partie d'obturation, au moins un secteur cylindrique convexe vers l'extérieur, s'étendant dans la concavité du dièdre droit, et dont la partie centrale est agencée sous forme de languette d'accrochage, tandis que la partie de recouvrement comporte, à l'intérieur, une patte, de forme concave conjuguée de celle du secteur, propre à venir s'accrocher par encliquetage sur le dit secteur.

Les moyens de liaison prévus sur la partie d'obturation sont agencés de manière symétrique par rapport au centre de cette partie de sorte que dans la position de montage à droite ou de montage à gauche les moyens de liaison occupent la même position dans la direction verticale.

Avantageusement, les nervures de raidissement de la partie d'obturation sont prévues à mi-hauteur du ou des secteurs cylindriques formant moyens de liaison pour la partie d'obturation.

L'invention consiste, mises à part les dispositions exposées ci-dessus, en un certain nombre d'autres dispositions dont il sera plus explicitement question ci-après à propos d'un exemple de réalisation particulier décrit avec référence aux dessins ci-annexés, mais qui n'est nullement limitatif.

La figure 1, de ces dessins, est une vue en perspective d'une goulotte et d'un embout selon l'invention en cours de montage à l'extrémité droite de la goulotte.

La figure 2 est une vue en perspective, sous un autre angle, de la goulotte et de l'embout de la figure 1.

La figure 3 est une vue en perspective, de l'avant, de la partie d'obturation de l'embout.

La figure 4 est une vue en perspective, de l'arrière, de la partie d'obturation de la figure 3.

La figure 5 est une vue en perspective, de l'arrière, de la partie de recouvrement de l'embout.

La figure 6 est une coupe verticale, partielle, de la partie d'obturation et de la partie de recouvrement de l'embout, au niveau des moyens de liaison conjugués.

La figure 7 est analogue à la figure 6, les deux parties étant représentées assemblées.

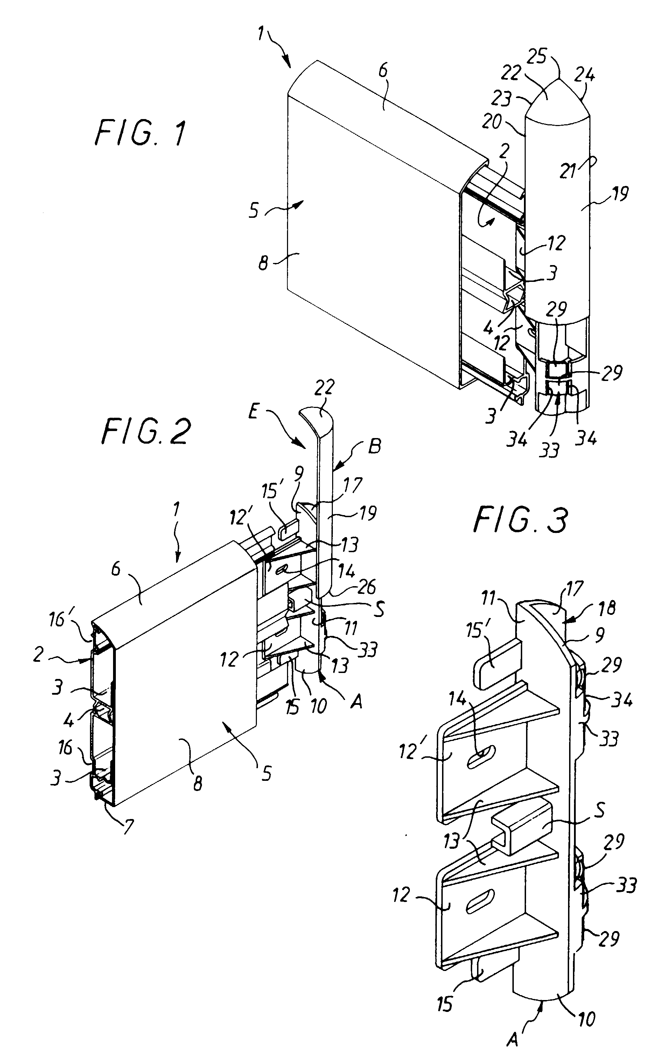

En se reportant aux figures 1 et 2 des dessins, on peut voir une goulotte 1 destinée au cheminement de conducteurs électriques, non représentés sur le dessin. Cette goulotte 1 comprend un fond de conduit 2 présentant, vers l'arrière, une paroi destinée à être fixée verticalement contre un mur, et, vers l'avant, des logements horizontaux parallèles formant chemins 3 pour des conducteurs ou des câbles électriques. La section transversale des chemins de guidage 3 a sensiblement la forme d'un U ouvert vers le haut, la paroi de fond 2 constituant une branche du U. Les chemins de guidage 3 peuvent être répartis à des hauteurs différentes suivant le type de goulotte 1 ; le nombre de chemins 3 pour une même goulotte peut varier d'un type à l'autre. Dans l'exemple représenté, deux chemins 3 sont prévus. Le chemin supérieur, situé sensiblement à mi-hauteur de la goulotte, surmonte un passage longitudinal 4, de section rectangulaire, fermé sur tous ses côtés et débouchant uniquement aux extrémités longitudinales. Ce passage 4 est situé à mi-hauteur du fond 2.

La goulotte 1 comporte en outre un couvercle 5 propre à être fixé par encliquetage sur les bords longitudinaux inférieur et supérieur du fond 2. Lorsque la goulotte est en place dans un plan vertical contre un mur, le couvercle 5 étant lui-même en place, les bords supérieur et inférieur de la goulotte sont constitués par les bords supérieur 6 et inférieur 7 du couvercle 5. Le bord supérieur 6 a une forme différente de celle du bord inférieur 7 ; dans l'exemple représenté, le bord supérieur 6 est constitué par une portion de surface cylindrique de génératrices horizontales lorsque le couvercle 5 est en place, à section transversale en arc de courbe dont la convexité est tournée vers l'extérieur ; bien entendu, toute autre forme est possible, comme par exemple une forme prismatique. Une paroi plane 8, verticale, assure la liaison entre le bord supérieur 6 et le bord inférieur 7 situé dans un plan horizontal, à angle droit de la paroi 8.

Sur les figures 1 et 2, la goulotte 1 a une longueur réduite suivant la direction horizontale, pour les besoins de la représentation. Il est clair que la goulotte 1 a généralement une longueur bien plus importante que celle représentée sur les dessins.

La fermeture de la goulotte 1 à ses extrémités, en particulier à l'extrémité droite selon les figures 1 et 2, est assurée par un embout E comprenant deux parties A et B.

La première partie A ou partie d'obturation est destinée à fermer l'espace intérieur de la goulotte. Cette partie A est prévue pour pouvoir être utilisée, de préférence, sur plusieurs modèles de fond 2 de goulotte cloisonnés différemment.

Cette première partie A présente un sommet 9 et une base 10 et peut être montée indifféremment à une extrémité droite ou gauche de la goulotte 1. Le passage d'une position de montage à l'autre est obtenu par une rotation de cette partie A échangeant les positions du sommet 9 et de la base 10 ; autrement dit, selon la représentation des dessins, la rotation en question est une rotation d'un demi-tour ( 180°) effectuée autour d'un axe horizontal perpendiculaire à la paroi de fond 2 de la goulotte et situé à mi-hauteur de la partie A.

La partie A comprend un flanc 11 formant obturateur du conduit de la goulotte 1 et empêchant la pénétration de corps étrangers. Ce flanc 11 est constitué par une paroi plane dont le contour vient épouser sensiblement le contour intérieur du couvercle 5. Toutefois, alors que le bord inférieur 7 du couvercle 5 a une forme différente de celle du bord supérieur 6, la base 10 du flanc 11 a la même forme en arc de courbe que le sommet 9, cette forme étant propre à épouser la face interne du bord supérieur 6 du couvercle 5. On peut ainsi réaliser une fermeture relativement précise en partie haute de l'espace intérieur de la goulotte 1, dans la zone où l'accès aux conducteurs électriques est possible. Par contre, en partie basse du couvercle 5, même si un jeu relativement important subsiste entre la base 10 et le bord inférieur 7 du couvercle, cela n'est pas gênant car il n'est pratiquement pas possible d'atteindre les conducteurs par en-dessous puisqu'ils reposent dans des chemins de câble 3 fermés en partie basse.

Le flanc 11, dont l'épaisseur peut être relativement réduite, n'offre pas trop de prise lors d'un choc. Il est muni de pattes saillantes 12, 12' de direction moyenne horizontale, perpendiculaire au plan du flanc 11. Dans l'exemple considéré, deux pattes 12, 12' sont prévues, mais leur nombre peut varier. Les pattes 12, 12' sont prévues de manière symétrique par rapport au centre de la partie A afin de retrouver une position relative identique pour le montage à droite ou le montage à gauche. Ces pattes 12, 12' ont un plan moyen vertical et sont renforcées par des nervures horizontales formant goussets 13 entre le flanc 11 et la patte associée. Les pattes 12, 12' sont munies de trous oblongs 14 dans leur zone centrale, pour permettre la fixation contre un mur à l'aide de vis qui traversent également le fond 2 de conduit.

Des pattes de centrage 15, 15' sont prévues respectivement au voisinage de la base et du sommet du flanc 11 pour coopérer avec des logements 16, 16' constitués par des sortes de rainures prévues sur la face arrière du fond, afin d'assurer un bon positionnement de la partie A et participer à sa liaison avec le fond 2. En outre le flanc 11 est muni, à mi-hauteur, d'une saillie S à section rectangulaire, conjuguée de la section du passage 4 et destinée à s'engager dans ce passage. L'ensemble de la saillie S et des pattes 15, 15' est également agencé pour conserver la même disposition relativement à la goulotte 1 que la pièce A soit présentée pour montage à droite ou pour montage à gauche.

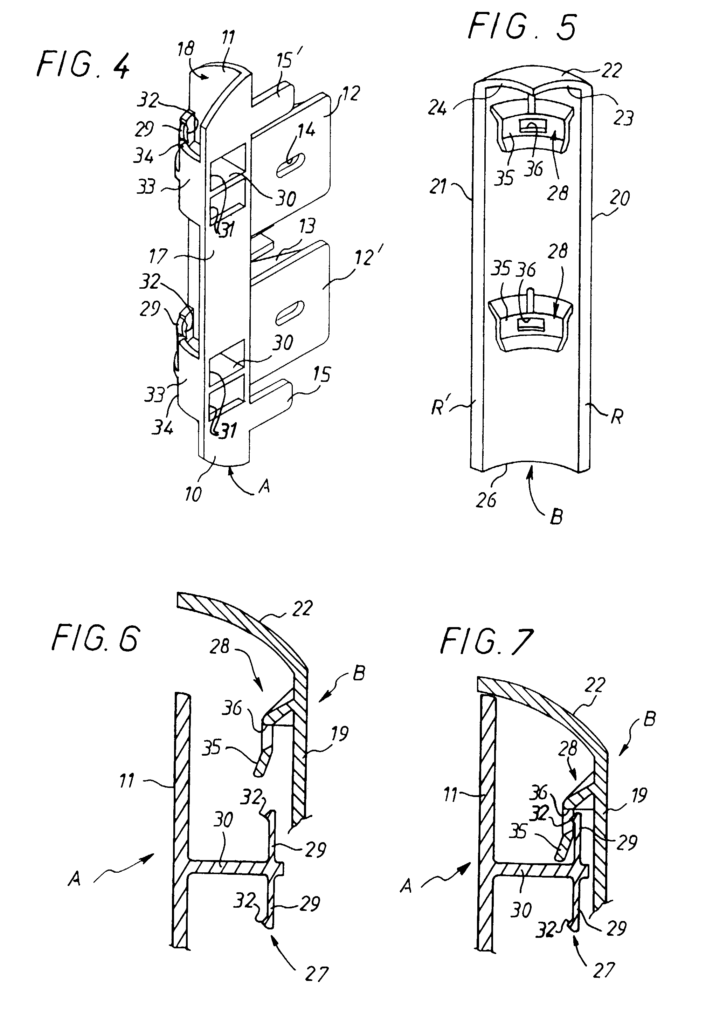

Le flanc 11 est solidaire d'une paroi 17 formant avec lui un dièdre droit 18 (voir figures 3 et 4) dont la concavité est destinée à être tournée vers l'extérieur. La face extérieure de la paroi 17, comme visible sur la figure 4, est plane de manière à pouvoir être placée contre le mur de fixation de la goulotte 1. Il est à noter que le plan des pattes 12, 12' est décalé vers l'avant par rapport à la paroi 17, tandis que les pattes 15, 15' ont le même plan moyen que la paroi 17.

La deuxième partie B ou partie de recouvrement, de l'embout E, est propre à se fixer sur la première partie A et à assurer le raccordement à la surface extérieure de la goulotte, c'est-à-dire à la surface extérieure du couvercle 5.

Cette deuxième partie B est essentiellement constituée par un secteur de surface cylindrique 19 (figure 2) dont les génératrices sont verticales lorsque cette partie B est en place à l'extrémité de la goulotte 1 fixée contre un mur. La coupe du secteur 19 par un plan orthogonal aux génératrices est constituée par un arc de circonférence légèrement supérieur à 90 degrés. Le secteur 19 est limité par deux bords verticaux 20,21, dont les faces arrière forment des zones de chevauchement R, R', visibles sur la figure 5. Le bord vertical 20 du secteur 19, côté goulotte, vient se placer contre, et recouvrir, l'extrémité de la paroi verticale 8 tandis que l'autre bord vertical 21 du secteur 19 est en appui contre le mur de fixation de la goulotte 1.

La partie B comporte une tête 22 formée par une sorte de coiffe convexe limitée par un contour en triangle curviligne, compris entre les faces d'un dièdre légèrement plus ouvert qu'un dièdre droit. Le bord 23 de la tête 22, tourné vers la goulotte 1, chevauche l'extrémité de la partie supérieure 6 du couvercle 5. L'autre bord 24 de la tête 22 vient en appui contre le mur de fixation de la goulotte 1. La tête 22 se termine par un sommet 25 en appui contre le mur. De préférence, les zones de chevauchement R, R' se prolongent au niveau des bords 23, 24, de sorte que le bord 23 vient légèrement recouvrir le bord adjacent de la partie 6 du couvercle.

La partie B comprend un pied 26 dont la forme est différente de la tête 22. Comme visible sur la figure 5, le pied 26 présente un espace libre limité par la section transversale inférieure du secteur 19.

Il apparaît que cette partie B peut être montée à droite ou à gauche de la goulotte 1, le passage de la position droite illustrée sur les figures 1 et 2 à la position gauche s'effectuant par rotation d'un quart de tour (90°) autour d'un axe vertical, sensiblement parallèle à la direction tête 22/ pied 26 . Le bord 23 qui, dans la position droite, est en contact avec l'extrémité du bord supérieur 6 de la goulotte, vient alors en appui , dans la position gauche, contre le mur de fixation de la goulotte tandis que le bord 24 vient en appui contre le bord supérieur gauche de la goulotte.

Des moyens de liaison conjugués 27, 28 (figure 6) sont prévus respectivement sur les parties A et B pour assurer leur fixation, avantageusement par une mise en place du haut vers le bas de la partie B sur la partie A.

Les moyens de liaison 27, sur la partie A, sont agencés pour occuper, relativement à la goulotte 1, une position relative identique dans le montage à droite ou gauche de la pièce A. Dans l'exemple considéré deux moyens de liaison 27 sont prévus symétriquement par rapport au plan horizontal médiateur de la partie A de sorte qu'il y a échange entre le moyen de liaison inférieur 27 et le moyen de liaison supérieur lors du passage tête en bas de la pièce A. En outre, chaque moyen de liaison 27 est symétrique par rapport à un plan horizontal médiateur.

Chaque moyen de liaison 27 comprend deux languettes 29 symétriques par rapport à une nervure de rigidification 30 dont le plan moyen est orthogonal à l'arête du dièdre 18. Deux ouvertures rectangulaires 31 sont prévues de part et d'autre de cette nervure 30 dans la paroi 17, notamment pour faciliter le moulage. L'extrémité interne des languettes 29, éloignée de la nervure 30, est munie d'un crochet 32. Les languettes 29 ancrées sur la nervure 30 présentent une certaine élasticité en flexion ; elles sont symétriques par rapport au plan bissecteur du dièdre 18.

De préférence, les languettes 29 sont délimitées dans un secteur cylindrique 33 reliant les bords extrêmes du flanc 11 et de la paroi 17, par des échancrures verticales 34 de chaque côté de la languette 29. La nervure 30 est située à mi-hauteur du secteur 33.

Les secteurs cylindriques 33 ont un rayon de courbure tel qu'ils viennent épouser la surface interne de la partie B lorsqu'elle est mise en place.

Les moyens de liaison 28 de la partie B comprennent au moins une patte 35 venue de moulage avec la pièce B, présentant une certaine élasticité, et recourbée vers le bas comme visible sur les dessins. Cette patte 35 a une forme concave conjuguée de celle de la patte 29 et du secteur 33 de manière à venir épouser la surface interne du secteur 33. La patte 35 comporte une ouverture 36 rectangulaire, dont les grands côtés sont situés dans un plan orthogonal aux génératrices de la surface 19. Lors de la mise en place, les crochets 32 viennent se verrouiller dans les ouvertures 36, avec une certaine liberté angulaire pour faciliter la mise en place. L'extrémité inférieure de la patte 35, comme visible sur la figure 6, est légèrement recourbée du côté opposé au secteur 19 pour faciliter l'engagement sur la patte 29.

Dans l'exemple considéré, deux moyens de liaison 28, conjugués des deux moyens de liaison 27, sont prévus à l'intérieur de la partie B, en des positions appropriées.

Les parties A et B sont avantageusement réalisées en matière plastique et sont moulées d'une seule pièce.

Ceci étant, l'utilisation et la mise en place de l'embout E conforme à l'invention résultent des explications qui précèdent.

Pour le montage à droite, des figures 1 et 2, on met en place la partie A à l'extrémité de la goulotte, en engageant les pattes 15, 15' dans les logements de centrage 16, 16' et la saillie S dans le logement 4. Lorsque le centrage est correct, on assure la fixation de la partie A sur le mur à l'aide de vis traversant les trous 14.

On présente ensuite la partie B et on l'engage de haut en bas sur la partie A de manière à assurer l'accrochage des pattes 35 sur les crochets 32 des languettes 29.

Lorsque la partie B est en place, ses surfaces extérieures 19 et 22 se raccordent à celles de la goulotte et assurent de manière esthétique la fermeture de cette goulotte.

Les nervures 30 assurent la rigidité de l'ensemble du flanc 11 et de la paroi 17 et évitent ainsi que lors d'un choc le flanc 11 ne s'écarte de l'extrémité de la goulotte.

La partie B assure, en plus de l'esthétique, le rôle de pare-chocs et apporte, grâce à la zone de chevauchement R, R' une sécurité supplémentaire par rapport à la pénétration d'objets.

Le sens de fixation du haut vers le bas a été choisi comme étant favorable par rapport aux trajectoires de chocs rencontrées dans le cas d'une plinthe.

Le montage sur une extrémité gauche de goulotte 1 de l'embout E de l'invention a lieu comme suit. La partie A est tournée d'un demi-tour, autour d'un axe horizontal passant à mi-hauteur, de manière à échanger les positions du sommet 9 et de la base 10 et, par là-même, des pattes 15, 15' et 12, 12'. La partie A est engagée dans la goulotte et fixée comme déjà indiqué.

La partie B est tournée d'un quart de tour autour d'un axe vertical de manière à échanger les positions des bords 23 et 24 de la tête 22 qui demeure en partie haute. La partie B est ensuite engagée et fixée de haut en bas sur la partie A.

L'embout E de l'invention est donc réversible c'est-à-dire qu'il convient aussi bien pour l'extrémité droite que pour l'extrémité gauche. Il permet de dissocier la fonction obstruction assurée par la partie A et les fonctions esthétique et tenue aux chocs assurées par la partie B.

## Revendications

1. Embout, pour goulotte (1) de cheminement de conducteurs électriques, destiné à fermer une extrémité de la goulotte (1) fixée sur un support, en particulier un mur ou une paroi verticale, cet embout présentant une surface extérieure propre à se raccorder à celles (5, 6,7) de la goulotte pour assurer une transition vers le support de fixation de la goulotte, caractérisé par le fait qu'il comprend deux parties (A, B), à savoir :
- une première partie d'obturation (A) pour fermer l'espace intérieur de la goulotte (1), cette première partie (A) présentant un sommet (9) et une base (10) et pouvant être montée indifféremment à une extrémité droite ou gauche de la goulotte (1), le passage d'une position de montage à l'autre étant obtenu par une rotation de cette première partie (A) échangeant les positions du sommet (9) et de la base (10);
- une deuxième partie de recouvrement (B) propre à se fixer sur la première partie (A) et à assurer le raccordement à la surface extérieure (5, 6) de la goulotte, cette deuxième partie présentant une tête (22) et un pied (26) et pouvant passer d'une position montage à droite à une position montage à gauche par une rotation autour d'un axe sensiblement parallèle à la direction tête/pied, sans échanger les positions respectives de la tête (22) et du pied (26),
la combinaison de ces deux parties (A, B) permettant à l'embout (E) d'être réversible.

2. Embout selon la revendication 1, caractérisé par le fait que la première partie d'obturation (A) est agencée pour passer d'une position de montage à droite à une position de montage à gauche par une rotation d'un demi-tour échangeant les positions du sommet et de la base, tandis que la deuxième partie de recouvrement (B) est agencée pour passer d'une position montage à droite à une position montage à gauche par une rotation d'un quart de tour autour du dit axe sensiblement parallèle à la direction tête/pied.

3. Embout selon la revendication 1 ou 2, pour goulotte dont le bord supérieur (6) a une forme différente de celle du bord inférieur (7), caractérisé par le fait que le sommet (9) et la base (10) de la première partie d'obturation (A) ont une forme identique, tandis que la tête (22) et le pied (26) de la deuxième partie de recouvrement (B) ont des formes différentes, adaptées à celles des bords supérieur et inférieur de la goulotte.

4. Embout selon l'une des revendications précédentes, caractérisé par le fait que la partie d'obturation (A) comprend un flanc (11) formant obturateur et une paroi (17) à angle droit avec ce flanc (10) et formant avec lui un dièdre droit (18) dont la concavité est destinée à être tournée vers l'extérieur de la goulotte, la paroi (17) ayant une face extérieure plane pour être placée contre le support de fixation de la goulotte, tandis que le flanc (11) est muni, du côté opposé à la paroi (17), de pattes saillantes (12, 12') avec des trous oblongs (14) pour la fixation de l'embout.

5. Embout selon la revendication 4, caractérisé par le fait que le flanc (11) et la paroi (17), formant le dièdre (18), sont reliés par des nervures (30), dans la concavité du dièdre, ayant un plan moyen orthogonal à l'arête du dièdre.

6. Embout selon l'une quelconque des revendications précédentes, caractérisé par le fait que la partie de recouvrement (B) comprend une paroi en forme de secteur cylindrique (19), à génératrices verticales lorsque la partie (B) est en place sur une goulotte fixée sur un mur, la coupe transversale du secteur (19) par un plan orthogonal aux génératrices étant formé par un arc de circonférence légèrement supérieur à 90 degrés.

7. Embout selon l'une quelconque des revendications précédentes, pour goulotte dont le bord supérieur (6) a une forme cylindrique, caractérisé par le fait que la tête (22) de la deuxième partie (B) est formée par une coiffe convexe comprise entre les faces d'un dièdre légèrement plus ouvert qu'un dièdre droit, avec un sommet (25) destiné à être placé contre le mur, alors que le pied (26) présente un espace libre.

8. Embout selon l'une quelconque des revendications précédentes, caractérisé par le fait que la partie de recouvrement (A) et la partie d'obturation (B) comportent des moyens de liaison conjugués (27, 28) pour assurer la fixation de la deuxième partie (B) sur la première partie (A).

9. Embout selon la revendication 8, caractérisé par le fait que les moyens de liaison conjugués (27, 28) sont agencés pour assurer une mise en place du haut vers le bas de la partie de recouvrement (B) sur la partie d'obturation (A).

10. Embout selon la revendication 8 ou 9, caractérisé par le fait que les moyens de liaison (27) de la partie d'obturation (A) comportent au moins une languette (29) déterminée par des échancrures (34) ménagées dans un secteur cylindrique (33) s'étendant dans la concavité du dièdre droit (18) d'une face à l'autre, tandis que la partie de recouvrement (B) comporte, à l'intérieur, au moins une patte (35) de forme concave conjuguée de celle de la patte (29) et du secteur cylindrique de la première partie (A), propre à venir s'accrocher par encliquetage sur un crochet (32) de la dite languette (29).

## Patentansprüche

1. Endstück für Rinne (1) zur Verlegung von elektrischen Leitern, das dazu bestimmt ist, ein Ende der an einem Träger, insbesondere an einer Mauer oder an einer vertikalen Wand, befestigten Rinne (1) zu verschließen, wobei dieses Endstück eine Außenfläche besitzt, die geeignet ist, sich an die (5, 6, 7) der Rinne anzuschließen, um einen Übergang zum Befestigungsträger der Rinne zu schaffen, dadurch gekennzeichnet, daß es zwei Teile (A, B) umfaßt, und zwar: - einen ersten Teil oder Verschlußteil (A) zum Verschließen des Innenraums der Rinne (1), wobei dieser erste Teil (A) einen Scheitel (9) und eine Basis (10) aufweist und beliebig an einem rechten oder an einem linken Ende der Rinne (1) befestigt werden kann, wobei der Übergang von einer Montagestellung auf die andere durch eine Drehung dieses ersten Teils (A) erhalten wird, welche die Stellungen des Scheitels (9) und der Basis (10) vertauscht, - einen zweiten Teil oder Abdeckteil (B), der am ersten Teil (A) befestigt werden kann und den Anschluß an die Außenfläche (5, 6) der Rinne gewährleistet, wobei dieser zweite Teil einen Kopf (22) und einen Fuß (26) aufweist und von einer rechten Montagestellung auf eine linke Montagestellung durch eine Drehung um eine zur Richtung Kopf/Fuß im wesentlichen parallele Achse übergehen kann, ohne die Stellungen des Kopfs (22) und des Fußes (26) zu vertauschen,
wobei die Kombination dieser beiden Teile (A, B) eine Umkehrbarkeit des Endstücks (E) gestattet.

2. Endstück nach Anspruch 1, dadurch gekennzeichnet, daß der erste Teil oder Verschlußteil (A) ausgebildet ist, um von einer rechten Montagestellung auf eine linke Montagestellung durch eine Drehung um eine halbe Umdrehung überzugehen, welche die Stellungen des Scheitels und der Basis vertauscht, während der zweite Teile oder Abdeckteil (B) ausgebildet ist, um von einer rechten Montagestellung auf eine linke Montagestellung durch eine Drehung um eine viertel Umdrehung um die zur Richtung Kopf/Fuß im wesentlichen parallele Achse überzugehen.

3. Endstück nach Anspruch 1 oder 2 für eine Rinne, deren oberer Rand (6) eine von der Form des unteren Rands (7) abweichende Form hat, dadurch gekennzeichnet, daß der Scheitel (9) und die Basis (10) des ersten Teils oder Verschlußteils (A) die gleiche Form haben, während der Kopf (22) und der Fuß (26) des zweiten Teils oder Abdeckteils (B) verschiedene Formen haben, die an die Formen des oberen und des unteren Rands der Rinne angepaßt sind.

4. Endstück nach einem der vorhergehenden Ansprüche, dadurch gekennzeichnet, daß der Verschlußteil (A) eine ein Schließorgan bildende Wange (11) und eine zu dieser Wange (11) rechtwinklige Wand (17) aufweist, die mit dieser ein rechtwinkliges Dieder (18) bildet, dessen Konkavität dazu bestimmt ist, dem Äußeren der Rinne zugewandt zu sein, wobei die Wand (17) eine ebene Außenseite hat, um an den Befestigungsträger der Rinne angelegt zu werden, während die Wange (11) auf der der Wand (17) entgegengesetzten Seite mit vorstehenden Lappen (12, 12') mit Langlöchern (14) für die Befestigung des Endstücks versehen ist.

5. Endstück nach Anspruch 4, dadurch gekennzeichnet, daß die Wange (11) und die Wand (17), die das Dieder (18) bilden, durch Rippen (30) in der Konkavität des Dieders verbunden sind, die eine zur Kante des Dieders rechtwinklige Mittelebene haben.

6. Endstück nach einem der vorhergehenden Ansprüche, dadurch gekennzeichnet, daß der Abdeckteil (B) eine Wand in Form eines Zylindersektors (19) umfaßt, dessen Erzeugende vertikal sind, wenn der Teil (B) an einer an einer Mauer befestigten Rinne an Platz ist, wobei der Querschnitt des Sektors (19) in einer zu den Erzeugenden rechtwinkligen Ebene von einem Kreisbogen mit einem Umfang von etwas mehr als 90° gebildet wird.

7. Endstück nach einem der vorhergehenden Ansprüche für eine Rinne, deren oberer Rand (6) eine zylindrische Form hat, dadurch gekennzeichnet, daß der Kopf (22) des zweiten Teils (B) von einer konvexen Kappe gebildet ist, die zwischen den Seiten eines Dieders enthalten ist, der etwas offener als ein rechtwinkliges Dieder ist, und die einen Scheitel (25) aufweist, der dazu bestimmt ist, an der Mauer anzuliegen, während der Fuß (26) einen freien Raum aufweist.

8. Endstück nach einem der vorhergehenden Ansprüche, dadurch gekennzeichnet, daß der Abdeckteil (A) und der Verschlußteil (B) einander zugeordnete Verbindungsmittel (27, 28) zur Befestigung des zweiten Teils (B) am ersten Teil (A) aufweisen.

9. Endstück nach Anspruch 8, dadurch gekennzeichnet, daß die einander zugeordneten Verbindungsmittel (27, 28) ausgebildet sind, um eine Anbringung des Abdeckteils (B) am Verschlußteil (A) von oben nach unten zu gestatten.

10. Endstück nach Anspruch 8 oder 9, dadurch gekennzeichnet, daß die Verbindungsmittel (27) des Verschlußteils (A) mindestens eine Zunge (29) aufweisen, die von Ausschnitten (34) abgegrenzt ist, die in einem Zylindersektor (33) vorgesehen sind, der sich in der Konkavität des rechtwinkligen Dieders (18) von einer Seite zur anderen erstreckt, während der Abdeckteil (B) innen mindestens einen Lappen (35) mit einer der Form des Lappens (29) und des Zylindersektors des ersten Teils (A) zugeordneten Form aufweist, der sich an einem Haken (32) der Zunge (29) durch Einrasten verhaken kann.

## Claims

1. An end portion, for a duct (1) for laying electrical conductors, which is intended to close an end of the duct (1) which is fixed on a support, in particular a wall or a vertical surface, said end portion having an external surface for being joined to those (5, 6. 7) of the duct to ensure a transition towards the support for fixing the duct, characterised in that it comprises two parts (A, B), namely:
- a first closure part (A) for closing the internal space of the duct (1), which first part (A) has a top (9) and a base (10) and can be mounted equally at a right-hand or a left-hand end of the duct (1), the change from one mounting position to the other being effected by rotation of said first part (A) such as to interchange the positions of the top (9) and the base (10); and
- a second covering part (B) for being fixed on the first part (A) and for making the connection to the external surface (5, 6) of the duct, said second part having a head (22) and a foot (26) and being capable of moving from a mounting position on the right to a mounting position on the left by a rotational movement about an axis which is substantially parallel to the head/foot direction without exchanging the respective positions of the head (22) and the foot (26),
the combination of said two parts (A, B) permitting the end portion (E) to be reversible.

2. An end portion according to claim 1 characterised in that the first closure part (A) is arranged to move from a mounting position on the right to a mounting position on the left by a rotational movement through half a turn exchanging the positions of the top and the base while the second covering part (B) is arranged to go from a mounting position on the right to a mounting position on the left by a rotational movement through a quarter of a turn about said axis which is substantially parallel to the head/foot direction.

3. An end portion according to claim 1 or claim 2 for a duct of which the upper edge (6) is of a shape that is different from that of the lower edge (7), characterised in that the top (9) and the base (10) of the first closure part (A) are of an identical shape while the head (22) and the foot (26) of the second covering part (B) are of different shapes which are adapted to those of the upper and lower edges of the duct.

4. An end portion according to one of the preceding claims characterised in that the closure part (A) comprises a flank (11) forming a closure means and a wall (17) at a right angle to said flank (10) and forming therewith a right dihedron (18) whose concavity is intended to be directed towards the exterior of the duct, the wall (17) having a flat external face to be placed against the support for fixing the duct while on the side opposite to the wall (17) the flank (11) is provided with projecting lugs (12. 12') with oblong holes (14) for fixing the end portion.

5. An end portion according to claim 4 characterised in that the flank (11) and the wall (17) forming the dihedron (18) are connected by ribs (30) in the concavity of the dihedron, having a mean plane which is orthogonal to the line of intersection of the dihedron.

6. An end portion according to any one of the preceding claims characterised in that the covering part (B) comprises a wall in the form of a cylindrical sector (19) with generatrices which are vertical when the part (B) is in place on a duct which is fixed on a wall, the cross-section of the sector (19) on a plane which is orthogonal to the generatrices being formed by an arc of a circumference which is slightly greater than 90°.

7. An end portion according to any one of the preceding claims for a duct of which the upper edge (6) is of a cylindrical shape characterised in that the head (22) of the second part (B) is formed by a convex cap between the faces of a dihedron which is slightly more open than a right dihedron, with an apex (25) which is intended to be placed against the wall while the foot (26) has a free space

8. An end portion according to any one of the preceding claims characterised in that the closure part (A) and the covering part (B) comprise paired connecting means (27, 28) to provide for fixing of the second part (B) on the first part (A).

9. An end portion according to claim 8 characterised in that the paired connecting means (27. 28) are arranged to ensure that the covering part (B) is set in place on the closure part (A) in a downward direction.

10. An end portion according to claim 8 or claim 9 characterised in that the connecting means (27) of the closure part (A) comprise at least one tongue portion (29) defined by notches (34) in a cylindrical sector (33) extending in the concavity of the right dihedron (18) from one face to the other while in the interior the covering part (B) comprises at least one lug (35) of concave shape which is conjugate with that of the lug (29) and the cylindrical sector of the first part (A), for coming into latching engagement on a hook (32) of said tongue portion (29).
